# FASCICULE DE BREVET EUROPEEN

(11) **EP 3 953 811 B1**
(45) Date de publication et mention de la délivrance du brevet: **22.01.2025**
(21) Numéro de dépôt: 20714651.5
(22) Date de dépôt: 03.04.2020
(51) Int. Cl.: G06F 9/48, G06F 9/455

(54) **PROCEDE ET DISPOSITIF DE MIGRATION D'UNE FONCTION VIRTUALISEE EN CAS DE DEFAILLANCE DE L'ENVIRONNEMENT TECHNIQUE DE SERVEURS**
VERFAHREN UND VORRICHTUNG ZUR MIGRATION EINER VIRTUALISIERTEN FUNKTION BEI EINEM AUSFALL IN DER TECHNISCHEN SERVERUMGEBUNG
METHOD AND DEVICE FOR MIGRATING A VIRTUALISED FUNCTION IN THE EVENT OF A FAILURE IN THE TECHNICAL SERVER ENVIRONMENT

(30) Priorité: 08.04.2019 FR 1903717
(43) Date de publication de la demande: 16.02.2022
(73) Titulaire: Orange, 92130 Issy-les-Moulineaux (FR)
(72) Inventeur: LEMOINE, Benoit, 92326 CHÂTILLON CEDEX (FR); BOUSSARDON, Jean-François, 92326 CHATILLON CEDEX (FR); NICULESCU, Anca, 92326 CHATILLON CEDEX (FR); PENHOAT, Joël, 92326 CHATILLON CEDEX (FR)
(86) Numéro de dépôt international: PCT/EP2020/059539
(87) Numéro de publication internationale: WO 2020/207914

(56) Documents cités:
- US-A1- 2013 346 973
- US-A1- 2015 237 066
- US-B1- 8 341 626

## Description

### 1. Domaine technique

L'invention se situe dans les réseaux de communications, proposant notamment des services mis en oeuvre à partir de fonctions virtualisées au sein de centre de données. L'invention vise plus spécifiquement à améliorer la disponibilité des services de communications mis en oeuvre à partir de fonctions virtualisées ainsi que la robustesse des réseaux de communications en exploitant des données de l'environnement technique.

### 2. Etat de la technique

Le secteur des télécommunications est au coeur d'une transformation digitale qui s'appuie sur des technologies émergentes telles que la virtualisation des fonctions réseaux (ou VNF - Virtual Network Functions) consistant à découpler les fonctions réseau des équipements physiques qui les supportent pour les déployer dans des serveurs génériques installés dans des centres de données, ou cloud, plus ou moins distribués. Par exemple, les données d'une application utilisée par des clients, qui transitaient et étaient traitées par des équipements physiques tels que des stations BTS (en anglais Base Transceiver Station), des NodeB, des équipements d'accès de type BNG (en anglais Broadband Network Gateway), PGW (en anglais Packet Data Network GateWay), Routeurs, équipements DPI (en anglais Deep Packet Inspection), Pare-Feu (en anglais Firewall), fonctions applicatives (en anglais Application Function), transitent et sont traitées par des VNFs déployées dans des serveurs génériques.

Ces fonctions virtualisées sont déployées sur des serveurs génériques en utilisant par exemple des machines virtuelles pour s'affranchir de matériels dédiés et faciliter le déploiement de nouvelles fonctions virtualisées tout en maîtrisant les coûts.

Les fonctions virtualisées peuvent être déployées sur des serveurs dans des centres de données plus ou moins grands et plus ou moins centralisés. Certaines fonctions virtualisées, traitant des données requérant une faible latence, ont plutôt tendance à être déployées en périphérie du réseau de communications, c'est-à-dire au plus proche des terminaux accédant aux services s'appuyant sur les fonctions virtualisées tandis que des fonctions virtualisées traitant des données moins exigeantes en terme de latence sont plutôt déployées dans des centres de données centralisés, généralement de taille plus importante. L'initiative MEC (en anglais Mobile Edge Computing) consistant à déployer des fonctions applicatives d'un réseau de communications en périphérie de réseau, ces fonctions pouvant être virtualisées, est un exemple de déploiement de VNFs à la périphérie d'un réseau de communications. Le déploiement de fonctions virtualisées dans des centres de données, fussent-ils centralisés ou distribués, requiert des ressources de calcul, de stockage, de mémoire, de réseau et d'énergie. Le bon fonctionnement des fonctions virtualisées nécessite que les ressources de stockage, de calcul, de mémoire, de réseau et d'énergie soient opérationnelles et adaptées aux traitements des fonctions virtualisées.

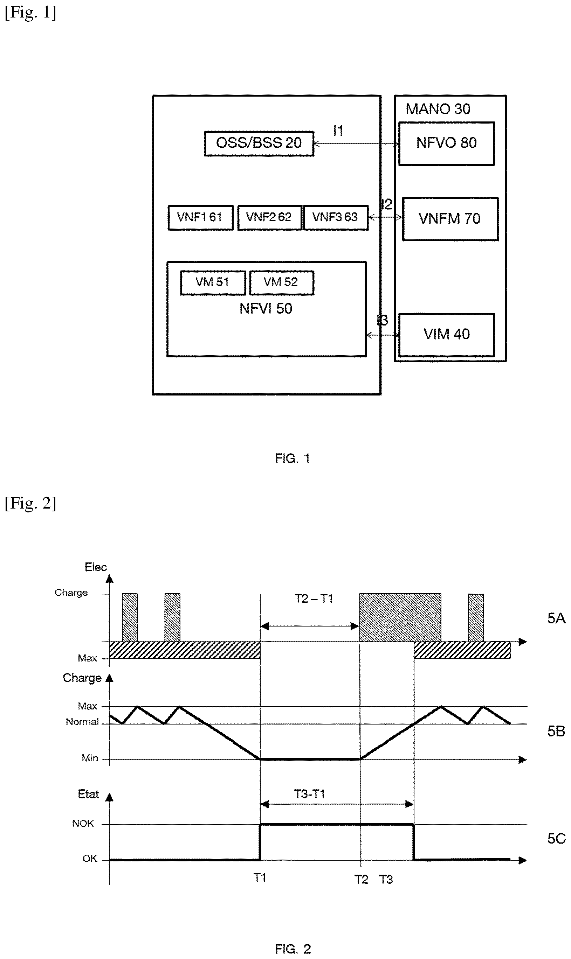

[Fig 1] présente une vue simplifiée d'une architecture de communication selon une technique antérieure.

L'architecture de communication, selon la [Fig. 1], permet le déploiement des fonctions virtualisées VNF1 61, VNF2 62 et VNF3 63 sur une architecture, ou infrastructure, NFVI 50. Cette infrastructure NFVI 50 peut être mise en oeuvre dans des centres de données (ou cloud) centralisés, c'est-à-dire en coeur de réseau ou bien distribués, plus proches des clients. Cette infrastructure NFVI 50 est composée de serveurs, tels que des machines virtuelles VM 51, VM 52 sur lesquelles sont installées les fonctions virtualisées citées ci-dessus. L'infrastructure NFVI 50 comprend en outre des ressources de calcul, de stockage, ces ressources étant gérées par une couche de virtualisation telle qu'un hyperviseur, ainsi que des ressources réseau non représentées sur [Fig. 1]. L'architecture de communication comprend en outre une entité de gestion des opérations et des services OSS/BSS 20.

La gestion des fonctions virtualisées, et notamment leur installation et le suivi de leur fonctionnement ainsi que leur déplacement le cas échéant est géré par une entité MANO (en anglais Management and Orchestration) 30 qui comprend une entité NFVO 80 d'orchestration gérant les services réseau élaborés à partir des fonctions virtualisées grâce à l'interface I1, une entité VNFM (en anglais Virtual Network Function Manager) 70 gérant les différentes fonctions virtualisées VNF1 61, VNF2 62, VNF3 63 grâce à l'interface I2, ainsi qu'une entité VIM (en anglais Virtualized Infrastructure Manager) 40 gérant les ressources de l'infrastructure NFVI 50 grâce à l'interface I3. Selon la technique antérieure, en fonction de besoins de services, des caractéristiques des fonctions virtualisées et des ressources de l'infrastructure en terme de ressources mémoire, de calcul et de capacités réseau, les fonctions virtualisées sont instanciées, déplacées d'une machine virtuelle à une autre ou d'un centre de données à un autre, ou bien encore désinstallées.

Le placement des fonctions virtualisées et leur gestion, en terme de ressources de calcul, de stockage, de mémoire et de réseau sont prises en compte selon les techniques de l'art antérieur, notamment dans le document ETSI GS NFV-IFA 005 V3.1.1 (2018-08) qui décrit les interfaces et les modèles d'information relatifs aux interfaces Or-Vi et Vi-Vnfm d'une architecture virtualisée telle que décrite par l'ETSI-NFV-MANO (en anglais Management and Orchestration). L'interface Or-Vi entre une entité de type VIM (en anglais Virtualized Infrastructure Manager) en charge de la gestion des ressources virtualisées et une entité de type NFVO (en anglais Network Function Virtualization Orchestrator) en charge de la gestion des ressources dans la fourniture d'un service. L'interface Or-Vi permet à l'entité NFVO de requérir auprès de l'entité VIM des ressources pour le déploiement de fonctions virtualisées et requérant de gérer ces ressources au sein d'une infrastructure physique de type NFVI (en anglais NFV Infrastructure). L'interface Vi-Vnfm véhicule les données échangées entre une entité de type VIM et une entité de type VNFM (en anglais Virtualised Network Function Manager) en charge de la gestion du cycle de vie des fonctions virtualisées (VNF). Elle permet notamment au VNFM de demander à l'entité VIM de déployer une instance de VNF sur les ressources réservées par le NFVO pour la VNF dans l'infrastructure NFVI. Le document ETSI GS NFV-IFA 006 V2.4.1 (2018-02) décrit les différentes informations échangées sur l'interface Vi-Vnfm.

En cas de défaillance ou de maintenance de ressources de calcul, de stockage, de mémoire ou de réseau, des mécanismes de résilience permettent aux fonctions virtualisées de migrer les services impactés vers d'autres ressources non impactées par la défaillance ou la maintenance. Le document ETSI GS NFV-REL 003 V1.1.1 (2016-04) décrit un certain nombre de ces mécanismes de résilience pouvant être mis en oeuvre dans les architectures virtualisées.

Le placement et la gestion des fonctions virtualisées par l'entité VIM peut s'appuyer sur une table de correspondance indiquant les serveurs ou machines virtuelles (telles que VMs) sur lesquels sont déployées les différentes fonctions virtualisées (VNFs). Lorsque l'entité VIM reçoit une demande de déploiement pour une fonction virtualisée, elle y réserve les ressources requises en y choisissant un serveur disposant de suffisamment de ressource de calcul, de stockage, de mémoire et de réseau pour y permettre le déploiement de la fonction virtualisée. Lorsque l'entité VIM reçoit une demande de suppression d'une fonction virtualisée sur un serveur, elle procède à la suppression et met à jour la table de correspondance en conséquence.

Si le placement et la gestion des fonctions virtualisées permettant de mettre en oeuvre un service prennent en compte les ressources de calcul, de mémoire, de stockage et de réseau des serveurs sur lesquels sont déployées des fonctions virtualisées, les ressources fournies par l'environnement technique des centres de données, et utilisées par les serveurs, ne sont pas pris en compte dans les techniques relevant de l'art antérieur.

[Fig 2] présente une description temporelle des événements se produisant dans une architecture de communications selon une technique antérieure.

[Fig. 2] est relative à un paramètre lié à l'alimentation électrique d'un serveur et présente trois courbes 5A, 5B, 5C. La charge électrique d'un serveur (courbe 5B), ou d'un ensemble de serveurs, dans un fonctionnement nominal évolue entre les valeurs Max et Normal. Lorsque la charge atteint le niveau Normal, l'alimentation électrique est activée pour être rechargée, comme indiqué sur la courbe 5A, pour atteindre le niveau Max. L'alimentation électrique peut être fournie par des batteries ou un groupe électrogène, voire par une alimentation électrique de type secteur. Si un problème survient dans le paramètre d'alimentation électrique, la charge électrique baisse en dessous du niveau Normal; mais cette fois-ci, la charge de l'alimentation électrique n'est pas activée, en raison du problème, pour être augmentée et celle-ci continue de baisser jusqu'à atteindre un niveau Min. Dans ce cas, le paramètre électrique (Etat - Courbe 5C) passe du mode OK au mode NOK à l'instant T1 et le serveur dont le paramètre électrique est défaillant n'est plus disponible suite à ce changement d'état. Les fonctions virtualisées installées sur le serveur dont le paramètre est représenté sur la courbe 5C ne sont alors plus disponibles non plus. Au temps T2, la charge reprend (courbe 5A) et lorsque la charge atteint un niveau suffisant pour rendre opérationnel le serveur, au temps T3, l'état du paramètre électrique de l'environnement technique passe du mode NOK au mode OK et le serveur redevient disponible, ainsi que les fonctions virtualisées installées sur le serveur. Le temps d'indisponibilité du serveur et des fonctions virtualisées, selon la technique antérieure, correspond au délai (T3 - T1) alors que le délai de rétablissement du défaut d'alimentation électrique, correspondant à une reprise de la charge de l'alimentation électrique du serveur correspond au délai (T2 - T1). Le problème d'alimentation électrique peut donc causer une indisponibilité des fonctions virtualisées et donc des services utilisant ces fonctions virtualisées pendant une durée assez longue, ici représentée par le délai (T3 - T1). Lorsqu'un événement sur un paramètre technique, tel que l'alimentation électrique d'un serveur, le niveau d'eau dans un centre de données, une détection d'intrusion dans le centre de données, ou un réchauffement anormal d'un serveur, les fonctions virtualisées, selon la technique antérieure, présentes sur le serveurs peuvent être impactées et les services s'appuyant sur ces fonctions virtualisées dégradés. Ainsi, les interfaces spécifiées dans les architectures virtualisées prévoient effectivement de pouvoir déployer et gérer des fonctions virtualisées en vue de mettre en oeuvre un service mais ces interfaces n'intègrent pas d'informations relatives aux ressources relatives à l'environnement technique (telles que l'alimentation électrique, la climatisation, l'inondation, l'intrusion, la fuite de gaz) dont dépendent les serveurs, les fonctions virtualisées et consécutivement les services et applications s'appuyant sur les fonctions virtualisées.

Le document US 2015/0237066 A1 décrit un système comprenant une interface configurée pour recevoir une indication d'un paramètre d'un premier dispositif informatique d'une pluralité et un module de migration configuré pour migrer une machine virtuelle ou une partie de la machine virtuelle du premier dispositif informatique vers un second dispositif informatique en réponse à l'indication reçue. Le document US 2013/0346973 A1 décrit un procédé permettant de prédire une insuffisance de ressources d'une machine physique pendant une période et de migrer une machine virtuelle présente sur la ressource physique vers une autre ressource physique sur la base des ressources utilisées par la machine virtuelle.

Le document US 8,341,626 B1 décrit un procédé de migration d'une machine virtuelle d'une machine physique à une autre en fonction d'indicateurs relatifs à des variables d'environnement comprenant notamment la disponibilité de sources d'alimentation alternatives.

La présente invention a pour objet d'apporter des améliorations par rapport à l'état de la technique.

### 3. Exposé de l'invention

L'invention vient améliorer la situation à l'aide d'un procédé de migration selon la revendication 1.

Le procédé de migration permet de pouvoir assurer qu'une fonction virtualisée puisse rester opérationnelle en cas d'un événement lié à l'environnement technique du serveur. Un serveur installé dans un centre de données peut en effet subir des dommages ou des dysfonctionnements en raison d'incidents sur l'alimentation électrique du serveur et/ou du centre de données, sur le refroidissement du serveur, sur un dégât dû par exemple à une inondation, sur une intrusion dans un centre de données et le procédé permet de prendre en compte ces paramètres en plus des paramètres relevant de l'art antérieur (ressources de stockage, ressources de calcul, ressources de mémoire et ressources réseau du serveur) pour installer ou déplacer une fonction virtualisée. La donnée d'un paramètre d'environnement technique peut ainsi être une puissance électrique, un état d'indisponibilité, une hauteur d'eau, ou un déclenchement d'un capteur en cas d'intrusion. Le procédé de migration permet ainsi de maintenir une fonction virtualisée en état de marche et donc de garantir que le service basé sur la fonction virtualisée reste disponible. En outre, dans le cas où une interruption de la fonction virtualisée, et consécutivement peut être également le(s) service(s) utilisant la fonction virtualisée, est requise alors ce temps d'interruption est réduit en migrant la fonction virtualisée avant que le serveur ne soit complètement hors service, par la définition d'un seuil adapté. Le procédé permet en outre de limiter l'impact d'un problème issu de l'environnement technique sur une centre de données en limitant les besoins en ressources relatives à l'énergie des serveurs grâce à la migration des fonctions virtualisées installées sur ces serveurs.

Selon un aspect de l'invention, dans le procédé de migration, l'au moins une donnée d'un paramètre de l'environnement technique est relative à l'alimentation électrique du serveur.

Dans le cas notamment où le centre de données ne bénéficie pas d'une alimentation continue ou si l'alimentation continue du serveur est défaillante et secourue par des batteries, le procédé peut avantageusement être mis en oeuvre pour notifier régulièrement à l'entité d'administration la puissance électrique pouvant être fournie au serveur par le dispositif d'alimentation électrique et dans le cas où cette puissance électrique passe au-dessous d'un seuil prédéfini équivalent à la puissance minimale requise par le serveur, l'entité d'administration peut décider automatiquement de déplacer les fonctions virtualisées se trouvant sur le serveur. La donnée transmise peut également être un état d'indisponibilité d'un serveur.

Selon un autre aspect de l'invention, dans le procédé de migration, l'au moins une donnée d'un paramètre technique d'environnement est relative au refroidissement du serveur.

Le refroidissement des serveurs dans des centres de données est une des priorités majeures pour assurer un fonctionnement optimal des serveurs. La prise en compte du paramètre de capacité d'extraction des calories par des messages de notification permet de s'assurer que le refroidissement est assuré et que les serveurs hébergeant des fonctions virtualisées ne vont pas défaillir. Dans le cas où la capacité d'extraction de calories descend au-dessous d'un seuil prédéfini équivalent à la dissipation thermique minimale du serveur, il convient de migrer les fonctions virtualisées sur un autre serveur. C'est également le cas où la donnée correspond à un état de panne du système de climatisation.

Selon un autre aspect de l'invention, dans le procédé de migration, l'au moins une donnée d'un paramètre technique d'environnement est relative à un niveau d'eau dans la pièce où se trouve le serveur.

Les centres de données peuvent subir des avaries telles que des intrusions d'eau. Il est donc nécessaire de vérifier que les pompes d'évacuation fonctionnent suffisamment bien pour empêcher l'élévation du niveau d'eau pouvant endommager un serveur. L'information sur le niveau d'eau par rapport à la position d'un serveur permet de pouvoir prévenir une indisponibilité de fonctions virtualisées installées sur le serveur en les migrant préventivement avant que le niveau d'eau soit dommageable pour le serveur.

Selon un autre aspect de l'invention, dans le procédé de migration, la détermination d'une action de sauvegarde comprend le déclenchement d'une échéance de migration.

En fonction des paramètres de l'environnement technique reçus et de l'évolution de ces paramètres, l'entité d'administration peut estimer une durée pendant laquelle un serveur continue d'être opérationnel avant de défaillir. Cette durée peut par exemple être calculée à partir des données de paramètres reçus, du seuil prédéfini et de caractéristiques intrinsèques de fonctionnement d'un serveur. Cette durée peut être exploitée pour mettre en oeuvre une migration d'urgence ou plus étalée dans le temps de fonctions virtualisées.

Selon un autre aspect de l'invention, dans le procédé de migration, le message de migration comprend une durée de migration à respecter.

Le message de migration envoyé à l'entité de gestion peut avantageusement comprendre une durée permettant à l'entité d'estimer la criticité de la migration et de mettre en oeuvre la migration des fonctions virtualisées de façon urgente ou bien avec un délai plus long. Cette durée de migration permet à l'entité de gestion de pouvoir programmer ses travaux de migration pour les fonctions virtualisées. La durée de migration peut également dépendre des caractéristiques de la fonction virtualisée, notamment pour s'assurer qu'une fonction virtualisée importante pour la délivrance d'un service soit migrée en priorité.

Selon un autre aspect de l'invention, dans le procédé de migration, le message de migration comprend une information d'identification relative à la fonction virtualisée.

Un même serveur peut accueillir plusieurs fonctions virtualisées distinctes. Certaines de ces fonctions peuvent être nécessaires pour la mise en oeuvre d'un service et d'autres optionnelles. L'envoi à l'entité de gestion d'un message de migration comprenant une information d'identification relative à la fonction virtualisée autorise l'entité de gestion à migrer les fonctions dont une information d'identification est transmise, réduisant ainsi le nombre de migrations à effectuer ou à prioriser, ce qui peut être important en cas de crise ou d'événement important, ou bien encore si les serveurs d'accueils sont en nombre limité.

Selon un autre aspect de l'invention, le procédé de migration comprend en outre la réception en provenance de l'entité de gestion d'un message d'information comprenant un identifiant du deuxième serveur sur lequel la fonction virtualisée a été migrée.

L'entité d'administration doit s'assurer d'être notifiée des paramètres d'environnement technique des serveurs sur lesquels des fonctions virtualisées sont installées. A cet effet, l'entité d'administration peut maintenir une table de correspondance indiquant les serveurs sur lesquels sont installées les différentes fonctions virtualisées. Lorsqu'une modification intervient dans la table, par exemple suite au procédé de migration, l'entité d'administration doit notifier à l'entité lui envoyant les messages de notification qu'elle souhaite recevoir les paramètres d'environnement technique du deuxième serveur.

Selon un autre aspect de l'invention, dans le procédé de migration, le deuxième serveur est sélectionné en fonction de sa localisation dans l'architecture de communication.

Les paramètres d'environnement technique peuvent impacter plusieurs serveurs en parallèle, notamment si un événement impacte tous les serveurs d'un centre de données. L'entité d'administration, par exemple en corrélant les différents messages de notification reçus, et/ou les différentes données relatives à des paramètres d'environnement technique peut identifier un problème sur un centre de données et donc sélectionner le deuxième serveur dans un centre de données non impacté par l'événement pour améliorer la résilience du service basé sur les fonctions virtualisées migrées.

Selon un autre aspect de l'invention, le procédé de migration comprend en outre le retrait du premier serveur d'une liste de serveurs aptes à accueillir une fonction virtualisée suite à la réception du message de notification.

Afin d'éviter que de nouvelles fonctions virtualisées soient instanciées sur le serveur impacté par un problème sur un paramètre ou plusieurs paramètres de l'environnement technique, le serveur est marqué de la table de correspondance comme ne pouvant plus recevoir de nouvelle fonction virtuelle.

Selon un autre aspect de l'invention, le procédé de migration comprend en outre l'extinction du premier serveur suite à l'émission à destination de l'entité de gestion du message de migration.

Le serveur menacé par la pénurie d'alimentation électrique ou par les conditions d'environnement dégradées, étant possiblement déchargé des différentes fonctions virtualisées qu'il hébergeait, peut être éteint. De la sorte, il ne consomme plus d'énergie électrique, si bien que les autres équipements du centre de données toujours actifs peuvent bénéficier d'énergie électrique de la part de la batterie pour une durée plus importante, dans le cas où le paramètre d'environnement électrique est de type électrique. De même, il ne dissipe plus de chaleur, si bien que les autres équipements du centre de calcul voient leur température augmenter moins rapidement et peuvent bénéficier de temps supplémentaire avant d'être impactés à leur tour par une température excessive. Enfin, si le circuit électrique alimentant le serveur éteint était celui le plus exposé à la montée de l'eau, il ne génèrera pas de court-circuit pouvant être détecté par l'organe de protection électrique en amont et risquant de couper l'alimentation électrique des autres équipements du centre de données dans lequel il se trouve.

Les différents aspects du procédé de migration qui viennent d'être décrits peuvent être mis en oeuvre indépendamment les uns des autres ou en combinaison les uns avec les autres.

L'invention concerne également un dispositif de migration selon la revendication 11. Ce dispositif, apte à mettre en oeuvre dans tous ses modes de réalisation le procédé de migration qui vient d'être décrit, est destiné à être mis en oeuvre dans une entité de gestion d'une infrastructure de communications, telle qu'une infrastructure virtualisée. Par exemple, le dispositif peut être mis en oeuvre dans une entité de type VIM.

L'invention concerne aussi un système de migration d'une fonction virtualisée installée sur un premier serveur dans un centre de données d'une architecture de communication comprenant
- une entité d'administration du premier serveur comprenant un dispositif de migration,
- une entité de gestion de la fonction virtualisée comprenant un récepteur apte à recevoir en provenance de l'entité d'administration un message de migration de la fonction virtualisée vers un deuxième serveur.

L'invention concerne aussi un programme d'ordinateur comprenant des instructions pour la mise en oeuvre des étapes du procédé de migration qui vient d'être décrit, lorsque ce programme est exécuté par un processeur et un support d'enregistrement lisible par un dispositif de détermination sur lequel est enregistré le programmes d'ordinateur.

Ce programme peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions des programmes d'ordinateur tel que mentionnés ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple sur un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel les programmes sont incorporés, le circuit étant adapté pour exécuter ou pour être utilisé dans l'exécution des procédés en question.

### 4. Brève description des dessins

Les [Fig. 1] et [Fig. 2] présentent respectivement une architecture et une description temporelle des événements relatifs à une technique antérieure, décrites dans la section 2.
D'autres caractéristiques et avantages de l'invention apparaîtront plus clairement à la lecture de la description suivante de modes de réalisation particuliers, donnés à titre de simples exemples illustratifs et non limitatifs, et des dessins annexés, parmi lesquels :
[Fig 3] présente une vue simplifiée d'une architecture de communication selon un premier aspect de l'invention,
[Fig 4] présente une description temporelle des étapes du procédé de migration selon un mode de réalisation de l'invention,
[Fig 5] présente une description temporelle des étapes du procédé de migration selon un autre mode de réalisation de l'invention,
[Fig 6] présente des étapes de mise en oeuvre de l'invention selon encore un autre mode de réalisation de l'invention,
[Fig 7] présente un exemple de structure d'un dispositif de migration selon un aspect de l'invention.

### 5. Description des modes de réalisation

Dans la suite de la description, on présente des modes de réalisation de l'invention dans une architecture de communication dans laquelle sont instanciées des fonctions virtualisées. Cette infrastructure peut être mise en oeuvre pour acheminer des données à destination de terminaux fixes ou mobiles et l'invention peut être destinée à migrer des fonctions virtualisées utilisées pour l'acheminement et/ou le traitement de données de clientèle résidentielle ou d'entreprises.

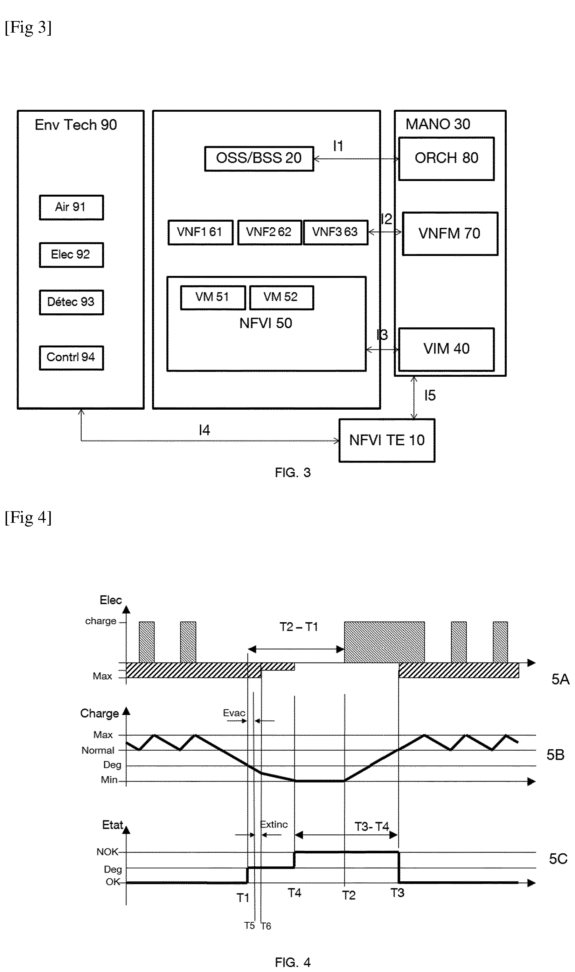

On se réfère à la [Fig 3] qui présente une vue simplifiée d'une architecture de communication selon un premier aspect de l'invention. Aux entités présentées dans la [Fig. 1], s'ajoutent des nouvelles entités permettant de prendre en compte les contraintes liées à l'environnement technique dans la gestion de l'installation des fonctions virtualisées VNF1 61, VNF2 62 et VNF3 63.

Les données de paramètres de l'environnement technique Env Tech 90 permettent d'assurer un fonctionnement optimal des serveurs (ou machines virtuelles) VM 51 et VM 52 pour que les fonctions virtualisées VNF1 61, VNF2 62 et VNF3 63 fonctionnent elles-mêmes de façon nominale et donc que les services mis en oeuvre à partir de ces fonctions virtualisées VNF1 61, VNF2 62 et VNF3 63 respectent une bonne qualité de service. Les paramètres d'environnement technique sont, par exemple, les paramètres Air 91 liées à la climatisation et à la garantie que la température des serveurs VM 51 et VM 52 soit comprise dans une plage de température donnée, les paramètres électriques Elec 92, les détecteurs Détec 93 permettant de surveiller le niveau d'eau dans des centres de données où sont installés les serveurs VM 51 et VM 52 (risque de court-circuit électrique), ou bien encore la concentration de gaz de ville (risque d'explosion) présent dans de tels centres de données, ou bien encore une intrusion dans les locaux (risque de vol de serveur). Cette liste de paramètres n'est pas exhaustive et ces paramètres peuvent être associés à un serveur parmi les serveurs VM1 et VM2 en particulier ou à un ensemble de serveurs.

L'environnement technique Env Tech 90 comprend en outre un contrôleur Contrl 94 permettant de gérer les différents paramètres techniques Air 91, Elec 92 et Détec 93. Les données relatives à ces différents paramètres sont communiquées à une entité d'administration NFVI TE 10 d'un serveur via une interface I4. Cette entité d'administration NFVI TE 10 communique avec l'entité de gestion VIM 40 via l'interface I5. Selon un exemple, l'entité NFVI TE 10 est co-localisée avec l'entité VIM 40. Dans ce cas, l'entité VIM 40 gère l'ensemble des paramètres relatifs aux serveurs de l'infrastructure NFVI 50, y compris les paramètres Air 91, Elec 92 et Détec 93 d'environnement technique.

En relation avec la [Fig 4], on présente une description des étapes du procédé de migration selon un mode de réalisation de l'invention. Ce mode de réalisation est mis en oeuvre dans le même contexte que celui décrit pour la [Fig. 2]. Les mêmes types de courbes sont représentés comme sur la [Fig. 2] et sont propres à un ou plusieurs serveurs d'un ou de plusieurs centres de données. Une première différence avec [Fig. 2] consiste à déterminer un nouveau niveau Deg de charge et d'état associé sur les courbes 5B et 5C. Ainsi, lorsqu'un problème survient sur l'alimentation électrique, la charge électrique d'un serveur diminue depuis le niveau Max et le problème électrique conduit à ce que la charge électrique de l'alimentation du serveur ne reprenne pas lorsque le niveau de charge atteint un niveau Normal. Donc la charge continue de diminuer pour atteindre un niveau Deg, pour dégradé, déclencheur d'une action à effectuer. Lorsque la charge atteint ce niveau (Courbe 5B et Courbe 5C), au temps T1, une action Evac d'évacuation est déclenchée entre T1 et T5. Cette action consiste par exemple, à déplacer une ou plusieurs fonctions virtualisées présente sur le serveur dont l'Etat est fourni dans la courbe 5C, de façon à garantir le bon fonctionnement de ces fonctions virtualisées.

Le serveur est alors dans un état dégradé Deg (Courbe 5C). Selon un exemple, certaines fonctions du serveur sont désactivées et où une partie ou l'ensemble des fonctions virtualisées sur le serveur sont migrées. La charge électrique du serveur (Courbe 5B) continuant à diminuer après le temps T5, une action d'extinction Extinc du serveur est mise en oeuvre entre T5 et T6. Cette action Extinc d'extinction consistant par exemple à couper l'alimentation électrique du serveur conduit à rendre les fonctions virtualisées encore présentes sur le serveur inopérantes et en outre, à réduire la consommation électrique d'un centre de données dans lequel se trouve le serveur considéré (ou l'ensemble des serveurs considérés) et consécutivement à limiter l'impact du problème d'alimentation électrique du centre de données en réduisant la consommation électrique par une baisse de la demande d'alimentation par les serveurs. Selon une alternative, cette opération peut en outre permettre de maintenir en priorité des serveurs dits prioritaires dans le centre de données en réduisant la consommation électrique globale par l'extinction de serveurs non prioritaires. Au temps T4, le serveur devient indisponible. Au temps T2, le problème d'alimentation électrique est résolu (courbe 5A) et le serveur acquiert une charge suffisante pour être opérationnel à l'instant T3, ce qui correspond à un niveau de charge normal Normal (courbe 5B). Le niveau de charge considéré comme suffisant pour accueillir de nouveaux des fonctions virtualisées dépend des fonctions virtualisées à installer et des niveaux de charge considérés comme suffisants pour la fourniture des services basés sur les fonctions virtualisées installées sur le serveur. Le niveau Dégradé Deg et les opérations mises en oeuvre sur le serveur aux instants T1, T5, T6 permet de garantir la disponibilité des fonctions virtualisées sur le ou les serveurs impactés. Elles permettent également de limiter l'impact d'un problème sur un ou plusieurs serveurs en menant des actions d'évacuation et possiblement d'extinction, réduisant ainsi le besoin en alimentation électrique dans le centre de données où est (où sont) installé(s) le(s) serveur(s), et permettant de limiter l'impact du problème et réduisant le temps d'indisponibilité au délai T3 - T4 grâce aux actions opérées de façon préventive par rapport au moment d'indisponibilité totale du serveur (Etat NOK).

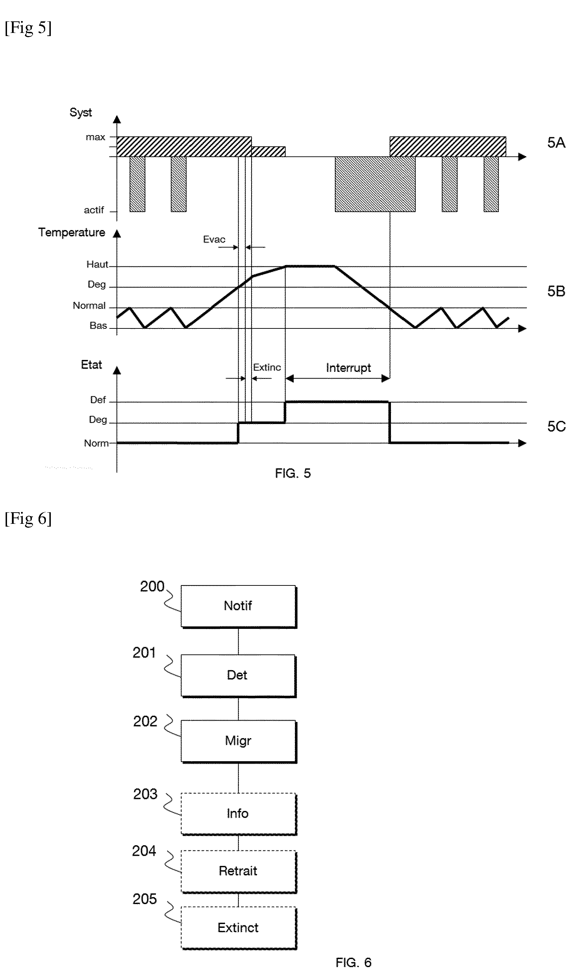

En relation avec la [Fig 5], on présente une description temporelle des étapes du procédé de migration selon un autre mode de réalisation de l'invention. Ce mode de réalisation est relatif à la température à laquelle un serveur est maintenu pour qu'il soit dans un fonctionnement optimal et donc au système de climatisation du serveur ou du centre de données dans lequel se trouve un serveur. Dans cette [Fig. 5], les trois courbes 5A, 5B et 5C sont représentées. Sur la courbe 5A, est représentée la mise en action du système de refroidissement, tandis que la courbe 5B est relative à la température observée du serveur et la courbe 5C est relative à l'état de refroidissement du serveur. En état de fonctionnement opérationnel, le système passe en mode actif (courbe 5A) dès lors que la température atteint un niveau Normal (courbe 5B) et ce, jusqu'à ce que la température du serveur atteigne le niveau Bas. Lors de ces phases cycliques de mise en fonctionnement du système de refroidissement (courbe 5A), la température du serveur oscille dans un fonctionnement normal entre les niveaux Bas et Normal (courbe 5B) et l'état du système de refroidissement est normal (Norm - courbe 5C). Si un problème survient sur le système de refroidissement permettant de réguler le paramètre Température de l'environnement technique, la température peut passer au-dessus du niveau Normal (courbe 5B) car le système ne s'est pas activé lorsque le niveau de température Normal a été atteint (courbe 5A). La température du serveur atteint alors le niveau Deg (courbe 5B) et une entité d'administration d'un ou plusieurs serveur(s) reçoit une donnée relative à la température, par exemple le paramètre Deg (courbe 5C). L'entité d'administration décide alors d'une action de sauvegarde d'une fonction virtualisée installée sur le(s) serveur(s) impacté(s) puis transmet à une entité gérant la fonction virtualisée un message de migration Evac.

Selon un autre exemple, l'action de sauvegarde pourrait aussi comprendre la duplication de la fonction virtualisée sur un autre serveur. L'entité d'administration peut en outre transmettre une durée de migration à respecter dans le message de migration transmis à l'entité de gestion de la fonction virtualisée. Il est possible qu'un serveur héberge plusieurs fonctions virtualisées et qu'une action de migration soit spécifique à une fonction virtualisée, auquel cas il peut être nécessaire, selon une alternative, de fournir un identifiant de la fonction virtualisée à l'entité de gestion de la fonction virtualisée, avec le cas échéant, une durée de migration spécifique à la fonction virtualisée.

Selon une alternative, le serveur connaissant un problème de température peut être éteint (Extinc) pour ne pas aggraver le problème de température que peut connaître un centre de données où est présent le serveur. Selon une alternative, l'extinction peut uniquement consister à stopper le fonctionnement d'une machine virtuelle sur un serveur. A partir du moment où la température atteint le niveau Deg (courbe 5B), la migration de la fonction virtualisée est demandée par l'entité d'administration à l'entité de gestion de la fonction virtualisée. Selon une autre alternative, l'extinction du serveur est effectuée par l'entité d'administration du serveur. Si la température du serveur continue d'augmenter malgré les opérations conduites, la température atteint le niveau Haut (courbe 5B) et le serveur est alors dans un état défaillant (Def - Courbe 5C) jusqu'au rétablissement et au redémarrage du système de refroidissement (courbe 5A). Lorsque le serveur est dans un état Deg ou Def, selon les cas, dans la liste de correspondance des fonctions virtualisées sur les serveurs, il est indiqué comme ne pouvant pas accueillir de fonctions virtualisées. Après un délai de fonctionnement permettant d'atteindre de nouveau la température Normal (courbe 5B), le serveur n'est plus dans un état défaillant (Def - Courbe 5C) et repasse dans un état normal (Norm - Courbe 5C).

Lorsque plus aucun paramètre technique d'environnement dégradé ne justifie l'extinction du serveur, le serveur peut être rallumé s'il a été éteint, puis marqué dans la liste de correspondance des fonctions virtualisées sur les différents serveurs comme pouvant accueillir de nouvelles fonctions virtualisées.

En relation avec la [Fig 6], on présente des étapes de mise en oeuvre de l'invention selon encore un autre mode de réalisation de l'invention. Dans ce mode de réalisation, le paramètre de l'environnement technique est relatif à un niveau d'eau dans la salle où est installé un serveur informatique. Le paramètre d'environnement technique correspond alors à un niveau d'eau au-delà duquel une opération de sauvegarde des fonctions virtualisées se trouvant sur le serveur doit être mise en oeuvre.

Lors d'une étape 200, un détecteur de niveau d'eau d'une entité de l'environnement technique d'un serveur envoie à une entité d'administration du serveur, ou d'une infrastructure comprenant des serveurs, un message de notification Notif comprenant une donnée d'un paramètre relatif au niveau d'eau pouvant causer un dysfonctionnement d'un ou plusieurs serveur(s). La donnée peut être le niveau d'eau, un état du niveau d'eau ou toute autre donnée relative au niveau d'eau permettant à l'entité d'administration de prendre une décision. Ce message peut comprendre un identifiant de serveur ou une information, par exemple un identifiant de centre de données, permettant à l'entité d'administration du ou des serveur(s) d'identifier le ou les serveur(s) impacté(s) par la donnée reçue.

A l'étape 201 Det, l'entité d'administration du ou des serveur(s) détermine une action de sauvegarde en fonction de la donnée du paramètre reçu. Si la donnée reçue indique un niveau d'eau qui peut être dommageable pour le serveur, il décide d'une action de migration d'une ou plusieurs fonction(s) virtualisée(s) installée(s) sur le serveur. L'action de sauvegarde peut, selon une alternative, également comprendre une action d'extinction du serveur et possiblement une action d'information d'autres entités de gestion, comme par exemple une entité de gestion des services, par exemple de type NFVO, opérés à partir de la fonction virtualisée à déplacer. L'action de sauvegarde peut également déclencher une échéance ou une durée à respecter pour la migration. Cette durée peut par exemple dépendre de différents paramètres reçus (type de fonctions virtualisées, donnée du paramètre reçue, types de serveurs, localisation du serveur). Le dispositif peut possiblement détenir une table de correspondance comprenant une liste des fonctions virtualisées installées sur les serveurs pour faire le lien entre le serveur impacté par le paramètre reçu et les actions de migration à mettre en oeuvre, voire les dispositifs de gestion de fonctions virtualisées à solliciter.

A l'étape 202 Migr, l'entité d'administration transmet à une entité de gestion de la fonction virtualisée installée sur un serveur impacté par la donnée du paramètre reçu un message de migration de la fonction virtualisée. Ce message peut comprendre une durée à respecter pour effectuer la migration, par exemple en fonction de l'échéance déterminée dans l'étape 201. Le message peut également comprendre un identifiant de la fonction virtualisées à migrer, dans le cas où par exemple l'entité de gestion gère plusieurs fonctions virtualisées et dans le cas où des actions ou des durées distinctes sont à respecter pour la migration des différentes fonctions virtualisées gérées par l'entité de gestion.

A l'étape 203 Info, selon une alternative, l'entité de gestion de la fonction virtualisée transmet à l'entité d'administration du serveur un message d'information indiquant que la migration a été effectuée ainsi qu'un identifiant d'un deuxième serveur sur lequel a été migré la fonction virtualisée. Cette information permet notamment à l'entité d'administration de mettre à jour sa table de correspondance des fonctions virtualisées installées sur les serveurs, et également possiblement de s'abonner à un système de notification de données de paramètres d'environnement technique relatifs au deuxième serveur. Le deuxième serveur a été possiblement sélectionné en fonction de sa localisation, topologique ou géographique, de façon à éviter d'installer la fonction virtualisée sur un serveur possiblement également impacté par la donnée de paramètre technique reçu.

A l'étape 204 Retrait, l'entité d'administration peut possiblement effectuer une opération Retrait où le premier serveur victime de l'incident relatif au paramètre technique est retiré de la table de correspondance par l'enttié d'administration pour pouvoir accueillir une fonction virtualisée. Ce retrait peut également être communiqué aux entités de gestion des fonctions virtualisées pour éviter qu'elles proposent une migration sur de tels serveurs lors d'incidents liés à l'environnement technique d'un serveur impacté.

A l'étape 205 Extinct, l'entité d'administration effectue possiblement une opération Extinct d'arrêt du serveur impacté par la donnée du paramètre technique reçu. Il peut s'agir d'éteindre une machine virtuelle, ou un conteneur, ou encore un serveur. Cette opération permet de protéger l'entité éteinte mais aussi de permettre un délai de rétablissement plus rapide en évitant les redémarrages intempestifs de ces serveurs lors du rétablissement du système voire également de protéger les autres équipements potentiellement impactés par le problème sur l'environnement technique. Un délai supplémentaire peut être laissé à l'entité d'administration du serveur pour procéder à un nettoyage de l'état de service du serveur avant son extinction. Les fonctions virtualisées y restant présentes peuvent être supprimées ou désactivées de sorte qu'au rallumage du serveur, elles ne se trouvent pas dans un état instable. La table de correspondance est mise à jour en conséquence de sorte que les fonctions virtualisées supprimées sur le serveur ne soient plus présentes dans la table.

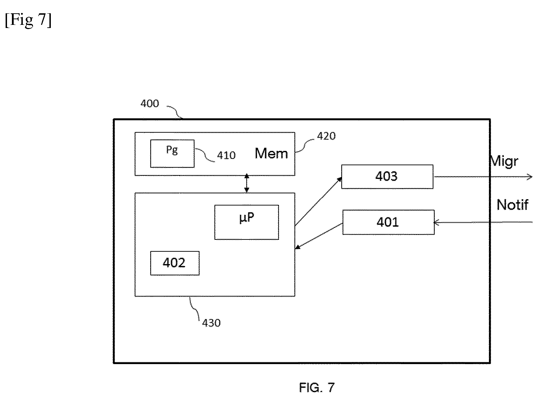

En relation avec [Fig. 7], on présente un exemple de structure d'un dispositif de migration.

Le dispositif 400 de migration met en oeuvre le procédé de migration, dont différents modes de réalisation viennent d'être décrits.

Un tel dispositif 400 peut être mis en oeuvre dans une entité de gestion d'une infrastructure de communication, telle qu'une entité de type VIM ou une entité de gestion spécifique à des paramètres de l'environnement technique.

Par exemple, le dispositif 400 comprend une unité de traitement 430, équipée par exemple d'un microprocesseur µP, et pilotée par un programme d'ordinateur 410, stocké dans une mémoire 420 et mettant en oeuvre le procédé de détermination selon l'invention. A l'initialisation, les instructions de code du programme d'ordinateur 410 sont par exemple chargées dans une mémoire RAM, avant d'être exécutées par le processeur de l'unité de traitement 430.

Un tel dispositif 400 comprend :
- un récepteur 401, apte à recevoir un message Notif de notification comprenant au moins une donnée d'un paramètre d'environnement technique relatif à un premier serveur,
- un module 402 de détermination, apte à déterminer une action de sauvegarde d'une fonction virtualisée si l'au moins une donnée dépasse un seuil prédéfini
- un émetteur 403, apte à émettre à destination d'une entité de gestion de la fonction virtualisée un message Migr de migration de la fonction virtualisée vers un deuxième serveur.

L'invention permet d'instancier ou de compléter un procédé d'installation et de migration de fonctions virtualisées (VNFs) sur une infrastructure physique en tenant compte de paramètres inhérents au bon fonctionnement des serveurs de l'infrastructure physique, tels que la température des serveurs, la charge électrique des serveurs, les niveaux d'eau ou de gaz pouvant impacter le bon fonctionnement des serveurs voire un risque de dégradation des serveurs. Cette liste de paramètres relatifs à l'environnement technique n'est pas limitée et peut être adaptée en fonction du lieu où sont déployés les serveurs et de l'instant où ces serveurs sont utilisés. Le terme «serveur» utilisé comprend aussi bien un serveur physique, une machine virtuelle ou un conteneur selon le type de déploiement considéré.

Les paramètres relatifs à l'environnement technique considérés peuvent être utilisés avec d'autres paramètres liés aux ressources de stockage, de calcul, de réseau, de disponibilité pouvant être prises en compte pour migrer ou non une fonction virtualisée sur un serveur. En outre, le procédé de migration peut également prendre en compte la spécificité de la fonction virtualisée pour la migrer ou non et à quelle échéance, selon notamment que la fonction virtualisée est critique ou non pour un service. L'entité d'administration du serveur peut être un dispositif de type VIM par exemple et le dispositif de gestion de la fonction virtualisés peut être par exemple un dispositif VNFM. Les données de paramètres d'environnement technique peuvent être transmis à l'entité d'administration directement ou via un contrôleur de paramètres d'environnement en charge de gérer les différents paramètres voire de corréler et d'interpréter différents paramètres reçus avant de les transmettre à l'entité d'administration. Les données transmises peuvent correspondre à des valeurs, à des états d'un système, à des variations, ou à des codes compréhensibles pour l'entité d'administration et ces données peuvent être émises de façon sécurisée par exemple en chiffrant ces données émises.

## Revendications

1. Procédé de migration d'une fonction virtualisée (VNF1 61, VNF2 62, VNF3 63) installée sur un premier serveur (VM 51, VM 52) dans un centre de données d'une architecture de communication, mis en oeuvre dans une entité (NFVI TE 10, VIM 40) d'administration dudit premier serveur, ladite entité étant apte à émettre à destination d'une entité (VNFM 70) de gestion de la fonction virtualisée (VNF1 61, VNF2 62, VNF3 63) des données relatives à l'installation de la fonction virtualisée, le procédé comprenant au moins une réception d'un message (Notif) de notification comprenant au moins une donnée d'un paramètre (Air 91, Elec 92, Détec 93) d'environnement technique relatif au premier serveur (VM51, VM 52), la détermination (Det) d'une action de sauvegarde de la fonction virtualisée (VNF1 61, VNF2 62, VNF3 63) si l'au moins une donnée franchit un seuil prédéfini, l'émission à destination de l'entité (VNFM 70) de gestion d'un message (Migr) de mise en oeuvre d'une migration de la fonction virtualisée (VNF1 61, VNF2 62, VNF3 63) vers un deuxième serveur et la réception en provenance de l'entité de gestion d'un message d'information comprenant un identifiant du deuxième serveur sur lequel la fonction virtualisée a été migrée, le message d'information étant adapté pour mettre à jour une table de correspondance indiquant les serveurs sur lesquels sont installées les différentes fonctions virtualisées, ladite table de correspondance étant exploitée pour que l'entité d'administration reçoive les messages de notification concernant les serveurs effectivement présents dans ladite table.

2. Procédé de migration, selon la revendication 1, où l'au moins une donnée d'un paramètre (Elec 92) de l'environnement technique est relative à l'alimentation électrique du serveur.

3. Procédé de migration, selon la revendication 1 ou la revendication 2, où l'au moins une donnée d'un paramètre (Air 91) technique d'environnement est relative au refroidissement du serveur.

4. Procédé de migration, selon l'une des revendications 1 à 3, où l'au moins une donnée d'un paramètre (Détec 93) technique d'environnement est relative à un niveau d'eau dans la pièce où se trouve le serveur.

5. Procédé de migration, selon l'une des revendications 1 à 4, où la détermination d'une action de sauvegarde comprend le déclenchement d'une échéance de migration.

6. Procédé de migration, selon l'une des revendications 1 à 5, où le message de migration comprend une durée de migration à respecter.

7. Procédé de migration, selon l'une des revendications 1 à 6, où le message de migration comprend une information d'identification relative à la fonction virtualisée.

8. Procédé de migration, selon l'une des revendications 1 à 7, où le deuxième serveur est sélectionné en fonction de sa localisation dans l'architecture de communication.

9. Procédé de migration, selon l'une des revendications 1 à 8, comprenant en outre le retrait du premier serveur (VM 51, VM 52) d'une liste de serveurs aptes à accueillir une fonction virtualisée (VNF1 61, VNF2 62, VNF3 63) suite à la réception du message (Notif) de notification.

10. Procédé de migration, selon l'une des revendications 1 à 9, comprenant en outre l'extinction du premier serveur (VM 51, VM 52) suite à l'émission à destination de l'entité de gestion du message (Migr) de migration.

11. Dispositif (400) de migration d'une fonction virtualisée (VNF1 61, VNF2 62, VNF3 63) installée sur un premier serveur (VM 51, VM 52) dans un centre de données d'une architecture de communication, mis en oeuvre dans une entité d'administration dudit premier serveur, ladite entité étant apte à émettre à destination d'une entité de gestion de la fonction virtualisée des données relatives à l'installation de la fonction virtualisée, le dispositif comprenant
- un récepteur (401), apte à recevoir au moins un message (Notif) de notification comprenant au moins une donnée d'un paramètre (Air 91, Elec 92, Détec 93) d'environnement technique relatif au premier serveur (VM 51, VM 52) et apte à recevoir en outre en provenance de l'entité de gestion un message d'information comprenant un identifiant du deuxième serveur sur lequel la fonction virtualisée a été migrée, le message d'information étant adapté pour mettre à jour une table de correspondance indiquant les serveurs sur lesquels sont installées les différentes fonctions virtualisées, ladite table de correspondance étant exploitée pour que l'entité d'administration reçoive les messages de notification concernant les serveurs effectivement présents dans ladite table.
- un module (402) de détermination apte à déterminer (Det) une action de sauvegarde de la fonction virtualisée si l'au moins une donnée franchit un seuil prédéfini
- un émetteur (403), apte à émettre à destination de l'entité (VNFM 70) de gestion un message (Migr) de mise en oeuvre d'une migration de la fonction virtualisée vers un deuxième serveur.

12. Système de migration d'une fonction virtualisée installée sur un premier serveur (VM 51, VM 52) dans un centre de données d'une architecture de communication comprenant
- une entité (NFVI TE 10, VIM 40) d'administration du premier serveur comprenant un dispositif (400) de migration selon la revendication 11,
- une entité (VNFM 70) de gestion de la fonction virtualisée (VNF1 61, VNF2 62, VNF3 63) comprenant
- un récepteur apte à recevoir en provenance de l'entité d'administration un message (Migr) de mise en oeuvre d'une migration de la fonction virtualisée (VNF1 61, VNF2 62, VNF3 63) vers un deuxième serveur,
- un émetteur apte à émettre à destination de l'entité d'administration un message d'information comprenant un identifiant du deuxième serveur sur lequel la fonction virtualisée a été migrée, le message d'information étant adapté pour mettre à jour une table de correspondance indiquant les serveurs sur lesquels sont installées les différentes fonctions virtualisées, ladite table de correspondance étant exploitée pour que l'entité d'administration reçoive les messages de notification concernant les serveurs effectivement présents dans ladite table.

13. Programme d'ordinateur comportant des instructions pour la mise en oeuvre du procédé de migration selon l'une quelconque des revendications 1 à 10, lorsque le programme est exécuté par un processeur.

14. Support d'enregistrement lisible par un dispositif de migration conforme à la revendication 11, sur lequel est enregistré le programme selon la revendication 13.

## Patentansprüche

1. Verfahren zur Migration einer auf einem ersten Server (VM 51, VM 52) in einem Datenzentrum einer Kommunikationsarchitektur installierten virtualisierten Funktion (VNF1 61, VNF2 62, VNF3 63), das in einer Verwaltungseinheit (NFVI TE 10, VIM 40) zum Verwalten des ersten Servers implementiert wird, wobei die Einheit geeignet ist, an eine Managementeinheit (VNFM 70) zum Managen der virtualisierten Funktion (VNF1 61, VNF2 62, VNF3 63) Daten bezüglich der Installation der virtualisierten Funktion zu senden, das Verfahren umfassend mindestens ein Empfangen einer Benachrichtigungsnachricht (Notif), die mindestens ein Datenelement eines Parameters (Air 91, Elec 92, Détec 93) der technischen Umgebung bezüglich des ersten Servers (VM51, VM 52) umfasst, das Bestimmen (Det) einer Aktion zum Sichern der virtualisierten Funktion (VNF1 61, VNF2 62, VNF3 63), wenn das mindestens eine Datenelement einen vorgegebenen Schwellenwert überschreitet, das Senden an die Managementeinheit (VNFM 70) einer Nachricht (Migr) zum Implementieren einer Migration der virtualisierten Funktion (VNF1 61, VNF2 62, VNF3 63) zu einem zweiten Server und das Empfangen von der Managementeinheit einer Informationsnachricht, die eine Kennung des zweiten Servers umfasst, auf den die virtualisierte Funktion migriert worden ist, wobei die Informationsnachricht dazu angepasst ist, eine Korrespondenztabelle zu aktualisieren, welche die Server angibt, auf denen die verschiedenen virtualisierten Funktionen installiert sind, wobei die Korrespondenztabelle verarbeitet wird, damit die Verwaltungseinheit die Benachrichtigungsnachrichten empfängt, welche die in der Tabelle tatsächlich vorhandenen Server betreffen.

2. Verfahren zur Migration nach Anspruch 1, wobei das mindestens eine Datenelement eines Parameters (Elec 92) der technischen Umgebung sich auf die Stromversorgung des Servers bezieht.

3. Verfahren zur Migration nach Anspruch 1 oder Anspruch 2, wobei das mindestens eine Datenelement eines Parameters (Air 91) der technischen Umgebung sich auf die Kühlung des Servers bezieht.

4. Verfahren zur Migration nach einem der Ansprüche 1 bis 3, wobei das mindestens eine Datenelement eines Parameters (Détec 93) der technischen Umgebung sich auf einen Wasserstand in dem Raum bezieht, in dem sich der Server befindet.

5. Verfahren zur Migration nach einem der Ansprüche 1 bis 4, wobei das Bestimmen einer Aktion zum Sichern das Auslösen einer Migrationsfrist umfasst.

6. Verfahren zur Migration nach einem der Ansprüche 1 bis 5, wobei die Migrationsnachricht eine zu beachtende Migrationsdauer umfasst.

7. Verfahren zur Migration nach einem der Ansprüche 1 bis 6, wobei die Migrationsnachricht eine Identifizierungsinformation bezüglich der virtualisierten Funktion umfasst.

8. Verfahren zur Migration nach einem der Ansprüche 1 bis 7, wobei der zweite Server in Abhängigkeit von seiner Lage in der Kommunikationsarchitektur ausgewählt wird.

9. Verfahren zur Migration nach einem der Ansprüche 1 bis 8, umfassend ferner das Entfernen des ersten Servers (VM 51, VM 52) aus einer Liste mit Servern, die geeignet sind, eine virtualisierte Funktion (VNF1 61, VNF2 62, VNF3 63) nach dem Empfangen der Benachrichtigungsnachricht (Notif) aufzunehmen.

10. Verfahren zur Migration nach einem der Ansprüche 1 bis 9, umfassend ferner das Ausschalten des ersten Servers (VM 51, VM 52) nach dem Senden der Migrationsnachricht (Migr) an die Managementeinheit.

11. Vorrichtung (400) zur Migration einer auf einem ersten Server (VM 51, VM 52) in einem Datenzentrum einer Kommunikationsarchitektur installierten virtualisierten Funktion (VNF1 61, VNF2 62, VNF3 63), die in einer Verwaltungseinheit des ersten Servers implementiert ist, wobei die Einheit geeignet ist, an eine Managementeinheit zum Managen der virtualisierten Funktion Daten bezüglich der Installation der virtualisierte Funktion zu senden, die Vorrichtung umfassend
- einen Empfänger (401), der geeignet ist, mindestens eine Benachrichtigungsnachricht (Notif) zu empfangen, die mindestens ein Datenelement eines Parameters (Air 91, Elec 92, Détec 93) der technischen Umgebung bezüglich des ersten Servers (VM 51, VM 52) umfasst, und geeignet ist, ferner von der Managementeinheit eine Informationsnachricht zu empfangen, die eine Kennung des zweiten Servers umfasst, auf den die virtualisierte Funktion migriert worden ist, wobei die Informationsnachricht dazu angepasst ist, eine Korrespondenztabelle zu aktualisieren, welche die Server angibt, auf denen die verschiedenen virtualisierten Funktionen installiert sind, wobei die Korrespondenztabelle verarbeitet wird, damit die Verwaltungseinheit die Benachrichtigungsnachrichten empfängt, welche die in der Tabelle tatsächlich vorhandenen Server betreffen
- ein Bestimmungsmodul (402), das geeignet ist, eine Aktion zum Sichern der virtualisierten Funktion zu bestimmen (Det), wenn mindestens ein Datenelement einen vorgegebenen Schwellenwert überschreitet
- einen Sender (403), der geeignet ist, an die Managementeinheit (VNFM 70) eine Nachricht (Migr) zur Implementierung einer Migration der virtualisierten Funktion zu einem zweiten Server zu senden.

12. System zur Migration einer auf einem ersten Server (VM 51, VM 52) in einem Datenzentrum einer Kommunikationsarchitektur installierten virtualisierten Funktion, umfassend
- eine Verwaltungseinheit (NFVI TE 10, VIM 40) zum Verwalten des ersten Servers, umfassend eine Vorrichtung (400) zur Migration nach Anspruch 11,
- eine Managementeinheit (VNFM 70) zum Managen der virtualisierten Funktion (VNF1 61, VNF2 62, VNF3 63), umfassend
- einen Empfänger, der geeignet ist, von der Verwaltungseinheit eine Nachricht (Migr) zur Implementierung einer Migration der virtualisierten Funktion (VNF1 61, VNF2 62, VNF3 63) zu einem zweiten Server zu empfangen,
- einen Sender, der geeignet ist, an die Verwaltungseinheit eine Informationsnachricht zu senden, die eine Kennung des zweiten Servers umfasst, auf den die virtualisierte Funktion migriert worden ist, wobei die Informationsnachricht dazu angepasst ist, eine Korrespondenztabelle zu aktualisieren, welche die Server angibt, auf denen die verschiedenen virtualisierten Funktionen installiert sind, wobei die Korrespondenztabelle verarbeitet wird, damit die Verwaltungseinheit die Benachrichtigungsnachrichten empfängt, welche die in der Tabelle tatsächlich vorhandenen Server betreffen.

13. Computerprogramm, das Anweisungen beinhaltet, die bei der Ausführung des Programms durch einen Prozessor das Verfahren zur Migration nach einem der Ansprüche 1 bis 10 implementieren.

14. Speichermedium, das von einer Vorrichtung zur Migration nach Anspruch 11 gelesen werden kann und auf dem das Programm nach Anspruch 13 gespeichert ist.

## Claims

1. Method for migrating a virtualized function (VNF1 61, VNF2 62, VNF3 63) installed on a first server (VM 51, VM 52) in a data centre of a communication architecture, implemented in an administration entity (NFVI TE 10, VIM 40) for administering said first server, said entity being able to transmit, to a management entity (VNFM 70) for managing the virtualized function (VNF1 61, VNF2 62, VNF3 63), data relating to the installation of the virtualized function, the method comprising at least receiving a notification message (Notif) comprising at least one item of data of a technical environment parameter (Air 91, Elec 92, Detec 93) relating to the first server (VM51, VM 52), determining (Det) an action to safeguard the virtualized function (VNF1 61, VNF2 62, VNF3 63) if the at least one item of data crosses a predefined threshold, sending, to the management entity (VNFM 70), a message (Migr) to migrate the virtualized function (VNF1 61, VNF2 62, VNF3 63) to a second server, and receiving, from the management entity, an information message comprising an identifier of the second server to which the virtualized function has been migrated, the information message being designed to update a correspondence table indicating the servers on which the various virtualized functions are installed, said correspondence table being used so that the administration entity receives the notification messages concerning the servers actually present in said table.

2. Migration method according to Claim 1, wherein the at least one item of data of a parameter (Elec 92) of the technical environment relates to the supply of electric power to the server.

3. Migration method according to Claim 1 or Claim 2, wherein the at least one item of data of a technical environmental parameter (Air 91) relates to the cooling of the server.

4. Migration method according to one of Claims 1 to 3, wherein the at least one item of data of a technical environment parameter (Detec 93) relates to a water level in the room where the server is located.

5. Migration method according to one of Claims 1 to 4, wherein determining a safeguarding action comprises triggering a migration deadline.

6. Migration method according to one of Claims 1 to 5, wherein the migration message comprises a migration duration to be complied with.

7. Migration method according to one of Claims 1 to 6, wherein the migration message comprises identification information relating to the virtualized function.

8. Migration method according to one of Claims 1 to 7, wherein the second server is selected on the basis of its location in the communication architecture.

9. Migration method according to one of Claims 1 to 8, furthermore comprising removing the first server (VM 51, VM 52) from a list of servers able to host a virtualized function (VNF1 61, VNF2 62, VNF3 63) following the reception of the notification message (Notif).

10. Migration method according to one of Claims 1 to 9, furthermore comprising shutting down the first server (VM 51, VM 52) following the transmission of the migration message (Migr) to the management entity.

11. Device (400) for migrating a virtualized function (VNF1 61, VNF2 62, VNF3 63) installed on a first server (VM 51, VM 52) in a data centre of a communication architecture, implemented in an administration entity for administering said first server, said entity being able to transmit, to a management entity for managing the virtualized function, data relating to the installation of the virtualized function, the device comprising
- a receiver (401), able to receive at least one notification message (Notif) comprising at least one item of data of a technical environment parameter (Air 91, Elec 92, Detec 93) relating to the first server (VM 51, VM 52) and also able to receive, from the management entity, an information message comprising an identifier of the second server to which the virtualized function has been migrated, the information message being designed to update a correspondence table indicating the servers on which the various virtualized functions are installed, said correspondence table being used so that the administration entity receives the notification messages concerning the servers actually present in said table,
- a determination module (402), able to determine (Det) an action to safeguard the virtualized function if the at least one item of data crosses a predefined threshold,
- a transmitter (403), able to transmit, to the management entity (VNFM 70), a message (Migr) to migrate the virtualized function to a second server.

12. System for migrating a virtualized function installed on a first server (VM 51, VM 52) in a data centre of a communication architecture comprising
- an administration entity (NFVI TE 10, VIM 40) for administering the first server, comprising a migration device (400) according to Claim 11,
- a management entity (VNFM 70) for managing the virtualized function (VNF1 61, VNF2 62, VNF3 63), comprising
- a receiver, able to receive, from the administration entity, a message (Migr) to migrate the virtualized function (VNF1 61, VNF2 62, VNF3 63) to a second server,
- a transmitter, able to transmit, to the administration entity, an information message comprising an identifier of the second server to which the virtualized function has been migrated, the information message being designed to update a correspondence table indicating the servers on which the various virtualized functions are installed, said correspondence table being used so that the administration entity receives the notification messages concerning the servers actually present in said table.

13. Computer program comprising instructions for implementing the migration method according to any one of Claims 1 to 10 when the program is executed by a processor.

14. Recording medium able to be read by a migration device according to Claim 11 and on which the program according to Claim 13 is recorded.
